# EUROPÄISCHE PATENTSCHRIFT

(11) **EP 1 201 474 B1**
(45) Veröffentlichungstag und Bekanntmachung des Hinweises auf die Patenterteilung: **25.02.2004**
(21) Anmeldenummer: 00123024.2
(22) Anmeldetag: 24.10.2000
(51) Int. Cl.: B60J 5/04

(54) **Seitenaufprallträger**
Side intrusion beam
Poutre d' enfoncement lateral

(43) Veröffentlichungstag der Anmeldung: 02.05.2002
(73) Patentinhaber: Benteler Automobiltechnik GmbH, 33102 Paderborn (DE)
(72) Erfinder: Gehringhoff, Ludger, 33106 Paderborn (DE)
(74) Vertreter: Ksoll, Peter, Dr.-Ing.

(56) Entgegenhaltungen:
- EP-A- 0 498 008
- WO-A-00/15453
- WO-A-98/43843
- US-A- 5 887 938
- US-A- 5 895 088

## Beschreibung

Die Erfindung betrifft einen Seitenaufprallträger gemäß den Merkmalen im Oberbegriff von Patentanspruch 1.

Ein derartiger Seitenaufprallträger ist durch die DE 296 22 985 U1 bekannt. Hierbei ist an einem Ende des Seitenaufprallträgers eine aus einem ebenen Endabschnitt hochgebogene Anschlussfahne vorgesehen. Diese bildet einen Haken und ragt bei geschlossener Tür in eine der Türsäulen der Fahrzeugkarosserie hinein. Der Haken soll neben der Türschlossverbindung der Fahrzeugtür eine zweite formschlüssige Verbindung herstellen und bei einem Seitenaufprall für eine zusätzliche Sicherung sorgen. Ein Schwachpunkt der bekannten Bauart ist jedoch der ebene Endabschnitt, der bei einem Seitenaufprall einknicken oder abreissen kann. Auch der Haken Ist nicht biegesteif genug. Der Haken kann dann seine Funktion nur bedingt erfüllen. Eine gewünschte höhere Seitensteifigkeit und Sicherheit wird nur bedingt erreicht.

Der Erfindung liegt daher ausgehend vom Stand der Technik die Aufgabe zugrunde, einen in seiner Funktion verbesserten Seitenaufprallträger zu schaffen, der eine im Belastungsfall stabilere Verbindung zur Türsäule gewährleistet.

Die Lösung dieser Aufgabe besteht nach der Erfindung in einem Seitenaufprallträger gemäß den Merkmalen im kennzeichnenden Teil von Patentanspruch 1.

Danach ist der Haken im Querschnitt hutförmig profiliert und an der Stimseite des sich in der Höhe verringernden Endabschnitts angeordnet. Das hutförmige Profil erstreckt sich vom Mittelabschnitt des Profils über den Endabschnitt, wobei die Höhe des Endabschnitts vom Mittelabschnitt ausgehend bis zur Stirnseite hin abnimmt. Der Endabschnitt geht dann einstückig in den Haken über.

Der erfindungsgemäße Seitenaufprallträger ist belastungsoptimiert ausgelegt. Er besitzt ein durchgehend starkes Profil von der Mitte bis zum Ende hin ohne biegeweiche Bereiche.

Bei geschlossener Tür sorgt der Haken für eine stabile zweite formschlüssige Verbindung zur Türstrebe. Eine höhere Seitensteifigkeit und damit eine höhere Energieaufnahme im Falle eines Seitenaufpralls ist hierdurch gewährleistet.

Der erfindungsgemäße Seitenaufprallträger kann sowohl bei Vordertüren als auch bei Hintertüren zum Einsatz gelangen. Der Haken greift demgemäß entweder in einen Ausschnitt an der B-Säule oder an der C-Säule der Fahrzeugkarosserie ein.

Gemäß den Merkmalen von Patentanspruch 2 ist der Haken gegenüber dem restlichen Profil in der Dicke verstärkt. Hierdurch kann die Festigkeit und Biegesteifigkeit im Anbindungsbereich weiter gesteigert werden. Vorzugsweise ist die Blechdicke im Endabschnitt gegenüber der Blechdicke des übrigen Profils um den Faktor 1,5 verstärkt.

Die Verstärkung im Hakenbereich kann durch den Einsatz eines Ausgangsblechs erreicht werden, welches an einem Ende einen Blechabschnitt aufweist, der gegenüber der übrigen Blechdicke dicker ausgebildet ist. Solche Bleche werden fachsprachlich auch Tailored Blanks genannt.

Möglich ist auch der Einsatz von sogenannten Patchwork Blanks, bei denen am hakenseitigen Ende zumindest ein weiteres Blech in Sandwich-Bauweise gefügt ist. Der Haken ist dann doppellagig ausgebildet, wie Patentanspruch 3 vorsieht. Die Doppellagigkeit wird vorzugsweise durch ein im Endabschnitt gefaltetes Blech realisiert sein. Dies ist fertigungstechnisch vorteilhaft.

Nach den Merkmalen des Patentanspruchs 4 sind an den Schenkeln des Profils quer abstehende Flansche vorgesehen. Diese Maßnahme trägt ebenfalls zur Erhöhung der Biegesteifigkeit des Seitenaufprallträgers und der Beulsteifigkeit der Tür vorteilhaft bei. Die Flansche verlaufen über den Endabschnitt bis zum Haken. Hierbei verbreitern sie sich bereichsweise. Dies ermöglicht eine stabile Festlegung des Seitenaufprallträgers am Türinnenblech, vorzugsweise durch Punktverschweißen. Des Weiteren wird durch die Flanschverbreiterung die Stabilität des hakenseitigen Endabschnitts erhöht. In bevorzugter Ausgestaltung weist auch der Haken seitliche Flansche auf.

Aus Korrosionsschutz- und Sicherheitsgründen ist der Haken mit einer Kunststoffkappe als Abdeckung versehen (Patentanspruch 5). Diese Maßnahme trägt auch zu einer besseren Optik bei.

Der erfindungsgemäße Seitenaufprallträger wird aus höchstfesten kalt- und warmformbaren Metallblechen ausgeführt. Ferner weist er einen Oberflächenschutz, beispielsweise durch eine Feuer- oder elektrolytische Verzinkung auf.

Die Erfindung ist nachfolgend anhand von in den Zeichnungen dargestellten Ausführungsbeispielen näher beschrieben. Es zeigen:
- Figur 1: einen Seitenaufprallträger in perspektivischer Darstellungsweise;
- Figur 2: einen Schnitt durch den Haken des Seitenaufprallträgers gemäß der Linie A-A;
- Figur 3: den hakenseitigen Endabschnitt in vergrößerter Darstellungsweise;
- Figur 4: in schematischer Darstellungsweise die Verbausituation des Seitenaufprallträgers im horizontalen Längsschnitt;
- Figur 5: den Endabschnitt eines Seitenaufprallträgers, hergestellt aus einem Tailored Blank;
- Figur 6: den falttechnisch hergestellten Endabschnitt eines Seitenaufprallträgers und
- Figur 7: einen Schnitt durch die Darstellung der Figur 6 gemäß der Linie S-S.

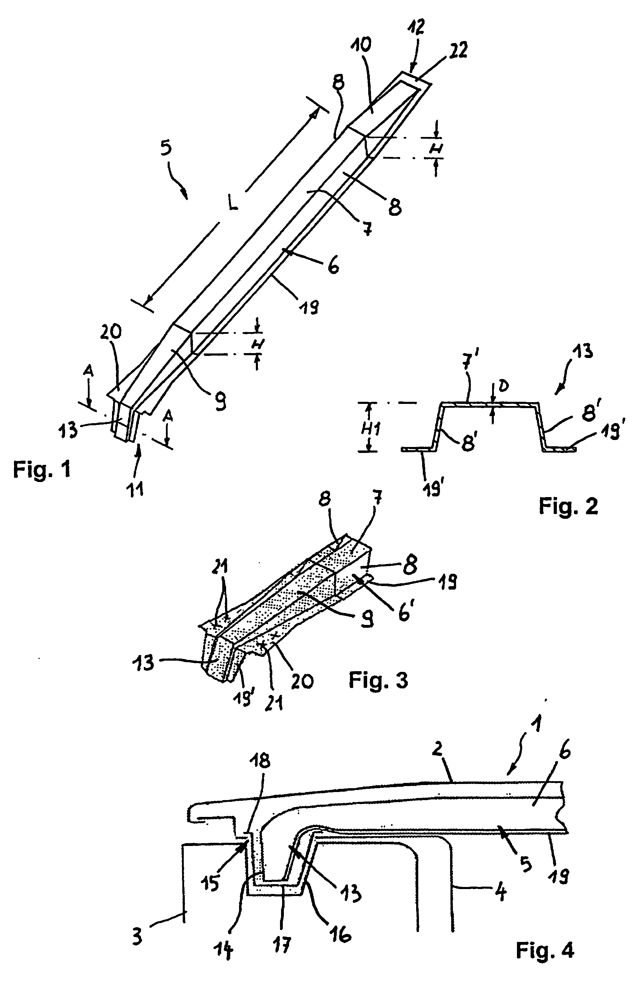

Figur 4 zeigt einen Ausschnitt einer Fahrzeugtür 1 für einen Personenkraftwagen. Die Außenhaut 2 der Fahrzeugtür 1 ist in Fahrzeuglängsrichtung leicht nach außen gewölbt. Technisch vereinfacht ist ferner die zum Fahrzeugrahmen gehörende Türsäule 3 (B-Säule) und das Türinnenblech 4 dargestellt.

In der Fahrzeugtür 1 ist zwischen der Außenhaut 2 und dem Türinnenblech 4 ein Seitenaufprallträger 5 eingegliedert (siehe hierzu auch Figuren 1 bis 3). Der Seitenaufprallträger 5 besteht aus Metallblech und soll die Fahrzeugtür 1 bei einem Seitenaufprall versteifen und Energie absorbieren.

Anhand der Figur 1 wird deutlich, dass der Seitenaufprallträger 5 über seinen mittleren Längenabschnitt L ein hutförmiges Profil 6 aufweist mit einem Steg 7 und zwei seitlichen Schenkeln 8. An das Profil 6 gliedern sich einstückig Endabschnitte 9, 10 an, die ebenfalls einen hutförmigen Querschnitt besitzen, wobei deren Höhe H bis zu den Stirnseiten 11, 12 des Seitenaufprallträgers 5 abnimmt.

An der Stirnseite 11 des türsäulenseitigen Endabschnitts 9 gliedert sich ein zur Türsäule 3 hin abgewinkelter Haken 13 an. Das freie Ende 14 des Hakens 13 ist durch eine Öffnung 15 im Innenblech 4 der Fahrzeugtür 1 geführt. Wie die Figur 4 zeigt, greift der Haken 13 bei geschlossener Fahrzeugtür 1 in eine Eingriffstasche 16 der Türsäule 3 ein. Mit 17 ist eine Kunststoffkappe bezeichnet, welche das über das Türinnenblech 4 vorstehende freie Ende 14 des Hakens 13 abdeckt. Die Kunststoffkappe 17 stützt sich innenseitig der Fahrzeugtür 1 mit Radialschenkeln 18 am Türinnenblech 4 ab.

Anhand der Schnittdarstellung der Figur 2 erkennt man, dass auch der Haken 13 einen hutförmigen Querschnitt mit einem Steg 7' und zwei Schenkeln 8' aufweist. Vorzugsweise beträgt die Profilhöhe H1 des Hakens 13 mindestens 15 mm. Hierdurch wird eine hohe Biegesteifigkeit garantiert.

An den Schenkeln 8 des Profils 6 sind quer abstehende Flansche 19 vorgesehen. Diese verlaufen über den Endabschnitt 9 bis zum Haken 13. Zur Stirnseite 11 hin weisen die Flansche 19 verbreiterte Flanschabschnitte 20 auf. Ober diese erfolgt die Festlegung des Seitenaufprallträgers 5 in der Türstruktur. Die Fügestellen für das Punktschweißen sind in der Figur 3 mit 21 gekennzeichnet. Auch an den Schenkeln 8' des Hakens 13 sind quer abstehende Flansche 19' vorgesehen. Ebenso weist der gegenüberliegende Endabschnitt 10 des Seitenaufprallträgers 5 an seinen Schenkeln 8 quer abstehende Flansche 19 auf. Auch an der Stirnseite 12 ist ein Flansch 22 vorgesehen.

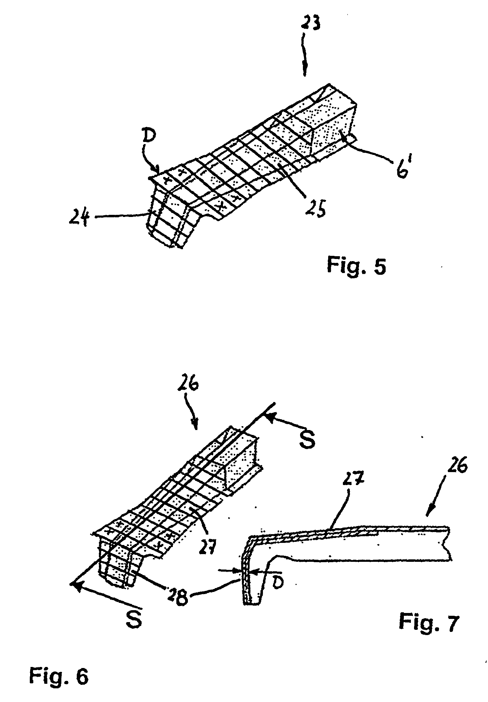

Bei der in der Figur 5 dargestellten Ausführungsform eines Seitenaufprallträgers 23 ist eine Verstärkung (durch die Linienschraffur gekennzeichnet) im Bereich des Hakens 24 durch den Einsatz eines Tailored Blanks hergestellt.

Hierbei ist die Blechdicke im Endabschnitt 25 einschließlich des Hakens 24 durch die Verwendung eines entsprechend zugeschnittenen Blechs gegenüber dem restlichen Profil 6' in der Dicke verstärkt. Gegenüber der Blechdicke im mittleren Abschnitt weist der Endabschnitt 25 eine um das 1,5fache verstärkte Dicke D auf.

Bei der Ausführungsform des Seitenaufprallträgers 26 gemäß den Figuren 6 und 7 ist der Endabschnitt 27 einschließlich des Hakens 28 doppellagig ausgebildet (durch die Linienschraffur gekennzeichnet). Hierzu ist das Ausgangsblech im Bereich des Endabschnitts 27 gefaltet, wie insbesondere anhand der Schnittdarstellung S-S gemäß der Figur 7 deutlich wird. Hierdurch ist der Haken 28 gegenüber dem restlichen Profil in der Dicke D verstärkt.

Ansonsten entsprechen die Seitenaufprallträger 23 bzw. 26 der zuvor erläuterten Bauart.

### Bezugszeichenaufstellung

- 1 -: Fahrzeugtür
- 2 -: Außenhaut
- 3 -: Türsäule
- 4 -: Türinnenblech
- 5 -: Seitenaufprallträger
- 6 -: Profil
- 6' -: Profil
- 7 -: Steg
- 7' -: Steg
- 8 -: Schenkel
- 8' -: Schenkel
- 9 -: Endabschnitt
- 10 -: Endabschnitt
- 11 -: Stirnseite
- 12 -: Stirnseite
- 13 -: Haken
- 14 -: freie Enden v. 13
- 15 -: Öffnung
- 16 -: Eingriffstasche
- 17 -: Kunststoffkappe
- 18 -: Radialschenkel
- 19 -: Flansch
- 20 -: Flanschabschnitte
- 21 -: Fügestelle
- 22 -: Flansch
- 23 -: Seitenaufprallträger
- 24 -: Haken
- 25 -: Endabschnitt
- 26 -: Seitenaufprallträger
- 27 -: Endabschnitt
- 28 -: Haken

- D -: Dicke v. 13
- H -: Höhe v. 9, 10
- H1 -: Profilhöhe v. 13
- L -: Längenabschnitt

## Patentansprüche

1. Seitenaufprallträger zur Eingliederung in die Fahrzeugtür (1) eines Kraftfahrzeugs, welcher auf mindestens dem überwiegenden Teil seiner Länge ein im Querschnitt hutförmiges Profil (6) mit einem Steg (7) und zwei Schenkeln (8) besitzt, wobei das Profil (6) an einem türsäulenseitigen Endabschnitt (9) einen zur Türsäule (3) hin abgewinkelten Haken (13, 24, 28) aufweist, welcher eine Öffnung (15) im Innenblech (4) der Fahrzeugtür (1)durchgreift, **dadurch gekennzeichnet, dass** der Haken (13, 24, 28) einen hutförmigen Querschnitt aufweist und an der Stirnseite (11) des sich in der Höhe (H) verringernden Endabschnitts (9) angeordnet ist.

2. Seitenaufprallträger nach Patentanspruch 1, **dadurch gekennzeichnet, dass** der Haken (24, 28) gegenüber dem restlichen Profil (6') in der Dicke (D) verstärkt ist.

3. Seitenaufprallträger nach Patentanspruch 2, **dadurch gekennzeichnet, dass** der Haken (28) doppellagig ausgebildet ist.

4. Seitenaufprallträger nach einem der Patentansprüche 1 bis 3, **dadurch gekennzeichnet, dass** an den Schenkeln (8) des Profils (6) quer abstehende Flansche (19) vorgesehen sind, welche über den Endabschnitt (9) bis zum Haken (13, 24, 28) verlaufen und bereichsweise verbreitert ausgebildet sind.

5. Seitenaufprallträger nach einem der Patentansprüche 1 bis 4, **dadurch gekennzeichnet, dass** der Haken (13) mit einer Kunststoffkappe (17) versehen ist.

## Claims

1. A side impact member for incorporation in the door (1) of a motor vehicle, said member having, over at least the major part of its length, a profile (6) of hat-shaped cross-section with a web (7) and two limbs (8), the profile (6) having, at an end section (9) adjacent the door pillar, a hook (13, 24, 28) bent at an angle to the door pillar (3) and extending through an opening (15) in the inner plate (4) of the vehicle door (1), **characterised in that** the hook (13, 24, 28) has a hat-shaped cross-section and is disposed on the end face (11) of the end section (9), which is of decreasing height (H).

2. A side impact member according to claim 1, **characterised in that** the hook (24, 28) is reinforced in thickness (D) compared with the remaining profile (6').

3. A side impact member according to claim 2, **characterised in that** the hook (28) is constructed in two layers.

4. A side impact member according to any one of claims 1 to 3, **characterised in that** transversely projecting flanges (19) are provided on the limbs (8) of the profile (6) and extend over the end section (9) as far as the hook (13, 24, 28) and are of widened construction in zones.

5. A side impact member according to any one of claims 1 to 4, **characterised in that** the hook (13) is provided with a plastic cap (17).

## Revendications

1. Poutre d'enfoncement latéral destinée à être incorporée dans la portière (1) d'un véhicule automobile qui, au moins sur la majeure partie de sa longueur, comporte un profilé en forme de chapeau (6) en section transversale avec une âme (7) et deux ailes (8), dans laquelle le profilé (6) présente, sur un tronçon d'extrémité (9) côté montant de portière, un crochet (13, 24,28) coudé vers le montant de portière (3), qui traverse une ouverture (15) dans la tôlerie intérieure (4) de la portière (1) du véhicule automobile, **caractérisée en ce que,**
le crochet (13,24,28) présente une section transversale en forme de chapeau et est disposé sur le côté frontal (11) du tronçon d'extrémité (9) allant en s'amenuisant dans la hauteur (H).

2. Poutre d'enfoncement latéral selon la revendication **1, caractérisée en ce que,**
le crochet (24,28) est renforcé dans l'épaisseur (D) par rapport au profilé restant (6').

3. Poutre d'enfoncement latéral selon la revendication **2, caractérisée en ce que,** le crochet (28) est conçu à double couches.

4. Poutre d'enfoncement latéral selon l'une des revendications 1 à 3, **caractérisée en ce que,** sur les ailes (8) du profilé (6) sont prévues des brides (19) qui s'étendant par le tronçon d'extrémité (9) jusqu'au crochet (13,24,28) et sont conçues de façon élargie par endroits.

5. Poutre d'enfoncement latéral selon l'une des revendications 1 à 4, **caractérisée en ce que,** le crochet (13) est muni d'un capuchon en matière plastique (17).
